(19) Europäisches Patentamt
European Patent Office
Office européen des brevets

(11) **EP 4 204 181 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **20804474.3**

(22) Anmeldetag: **04.11.2020**

(51) Internationale Patentklassifikation (IPC):
**B23Q 3/155** (2006.01)

(52) Gemeinsame Patentklassifikation (CPC):
**G05B 19/40938; B23Q 3/15503;** G05B 2219/36361;
G05B 2219/36362; G05B 2219/36364;
G05B 2219/50264; Y02P 90/02

(86) Internationale Anmeldenummer:
**PCT/EP2020/080981**

(87) Internationale Veröffentlichungsnummer:
**WO 2022/096087 (12.05.2022 Gazette 2022/19)**

(54) **VERFAHREN ZUR RECHNERGESTÜTZTEN OPTIMIERUNG VON WERKZEUGTRANSPORTEN FÜR MINDESTENS EIN EINE ANZAHL VON MAGAZINPLÄTZEN AUFWEISENDES WERKZEUGMAGAZIN**

METHOD FOR THE COMPUTER-AIDED OPTIMIZATION OF TOOL TRANSPORTATION OPERATIONS FOR AT LEAST ONE TOOL MAGAZINE HAVING A NUMBER OF MAGAZINE SPACES

PROCÉDÉ D'OPTIMISATION ASSISTÉE PAR ORDINATEUR D'OPÉRATIONS DE TRANSPORT D'OUTILS POUR AU MOINS UN MAGASIN D'OUTILS COMPORTANT UN CERTAIN NOMBRE D'ESPACES DE MAGASIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.07.2023 Patentblatt 2023/27**

(73) Patentinhaber: **Siemens Aktiengesellschaft 80333 München (DE)**

(72) Erfinder:
• **BAIER, Georg 81241 München (DE)**
• **HUPP, Lena 81371 München (DE)**
• **ROYER, Christian 85521 Ottobrunn (DE)**

(74) Vertreter: **Siemens Patent Attorneys Postfach 22 16 34 80506 München (DE)**

(56) Entgegenhaltungen:
**WO-A1-2020/057713      DE-A1- 19 950 318 JP-A- H0 929 575**

**Beschreibung**

Die Erfindung betrifft ein Verfahren und eine Vorrichtung zur rechnergestützten Optimierung von Werkzeugtransporten für mindestens ein eine Anzahl von Magazinplätzen aufweisendes Werkzeugmagazin, das für eine Werkzeugmaschine verwendet wird oder verwendbar ist, welche zur Fertigung von einem oder mehreren Werkstücken mit Hilfe der von einem Magazingerät an einem Bereitstellungsplatz bereitgestellten Werkzeuge eingesetzt wird.

Moderne Werkzeugmaschinen ermöglichen eine schnell wechselnde Produktion verschiedener Werkstücke, die zeitlich sehr nah am Bedarf des Kunden ist. Um eine kontinuierliche Produktion, trotz einer breiten Vielfalt an Werkstücken zu ermöglichen, verfügen diese Werkzeugmaschinen über große Magazine, in denen die Werkzeuge abgelegt werden.

Beim Tausch des Werkzeugs kann der Transport der Werkzeuge vom Magazin zur Spindel und zurück zu Wartezeiten führen. Zur Vermeidung solcher Wartezeiten wird die Magazinbelegung angepasst. Eine Wartezeit minimierende Magazinbelegung ist jedoch von dem Programm der Werkzeugmaschine abhängig, d.h. der Einsatzreihenfolge und der Einsatzdauer der benutzten Werkzeuge. Wechselt das Programm, z.B. weil ein anderes Produkt produziert werden soll, so muss die Magazinbelegung angepasst werden.

Eine Werkzeugmaschine ist nach DIN 69 651 eine "mechanisierte und mehr oder weniger automatisierte Fertigungseinrichtung, die durch relative Bewegung zwischen Werkstück und Werkzeug eine vorgegebene Form am Werkstück oder eine Veränderung einer vorgegebenen Form an einem Werkstück erzeugt" [6]. Im vorliegenden Kontext zugrunde liegenden Werkzeugmaschinen handelt es sich vorzugsweise um NC-Drehmaschinen. Diese besitzen eine Werkzeugspindel, in der sich das bearbeitende Werkzeug, auch Spindelwerkzeug genannt, bei der Bearbeitung befindet. Die Werkzeuge, die von der Maschine zur Bearbeitung eines Werkstücks verwendet werden können, sind in einem Werkzeugmagazin abgelegt. Es gibt verschiedene Arten von Werkzeugmagazinen wie Ketten- oder Regalmagazine. In diesen Magazinen können sehr viele verschiedene Werkzeuge untergebracht werden; bis zu 500 Werkzeuge und mehr.

Im vorliegenden Kontext werden Regalmagazine betrachtet. Die Werkzeuge sind darin auf festen Plätzen abgelegt, von/an denen sie mittels einer Vorrichtung (Magazinbediengerät) abgeholt/abgelegt werden. Im Unterschied zum Kettenmagazin ist dabei die Zugriffszeit auf ein Werkzeug unabhängig von der aktuellen Konfiguration des Magazins. Vorteilhaft ist dieser Magazintyp daher, wenn eine große Vielfalt von unterschiedlichen Werkstücken mit einer Maschine produziert werden soll, für die eine Vielzahl an unterschiedlichen Werkzeugen benötigt wird.

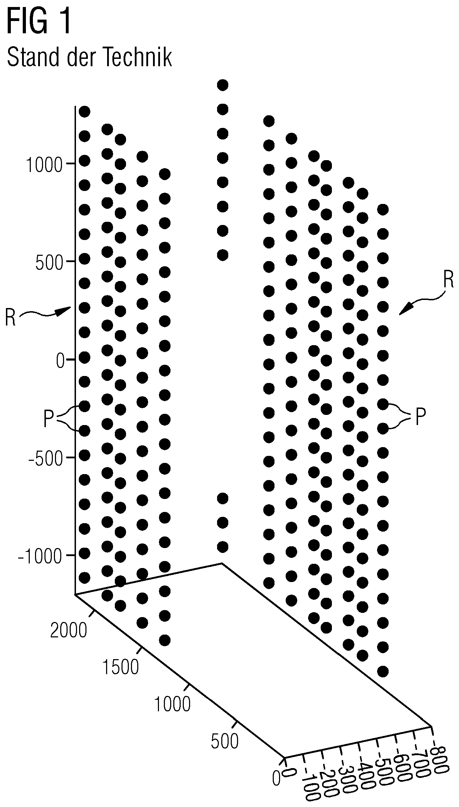

In PCT/EP2018/074999 ist bereits eine Umsortierung von Werkzeugen im Magazin vorgeschlagen worden, bei der die Umsortierung der Werkzeuge eine Aussetzung der Produktion erfordert. In Figur 1, die aus der genannten Patentanmeldung entnommen ist, wird ein Regalmagazin R mit Magazinplätzen bzw. Magazinpositionen P gezeigt. Auf der x-, y- bzw. z-Achse ist eine fiktive Anzahl von Magazinpositionen angezeigt.

Die Bearbeitung eines Werkstücks erfolgt mit einer vorgegebenen Sequenz von Werkzeugen. Ein Werkzeug kann dabei durchaus mehrmals in dieser Sequenz vorkommen. Während der Bearbeitung eines Werkstücks mit einem Werkzeug der Sequenz, dem Spindelwerkzeug, wird im Regalmagazin das Vorgängerwerkzeug auf seinen Platz zurückgefahren und dort abgelegt. Anschließend erfolgt eine Leerfahrt zum Standort des Nachfolgerwerkzeugs. Dieses wird dann aufgenommen und zum Übergabepunkt bzw. Bereitstellungsplatz an die Spindel transportiert. Ist die Bearbeitung mit dem aktuellen Spindelwerkzeug beendet, so erfolgt ein Austausch des Werkzeugs in der Spindel (z.B. mit einem Werkzeugwechsler). Falls die Bearbeitung mit dem Spindelwerkzeug beendet ist, aber das Nachfolgerwerkzeug noch nicht bereitsteht, entsteht eine Wartezeit bei der Spindelversorgung und die Produktionsdauer des Werkstücks verlängert sich.

Die Effizienz einer Werkzeugmaschine kann durch verschiedene Faktoren beeinflusst werden. Stehen jedoch die NC-Programme und die Mengen der zu bearbeitenden Werkstücke fest, so wird die Maschineneffizienz nur noch durch Wartezeiten zwischen den aufeinander folgenden Bearbeitungsschritten des Werkstücks (Operationen) beeinflusst. Diese Wartezeiten entstehen, wenn es nach dem Ende der Bearbeitung mit dem Spindelwerkzeug zu einer Wartezeit kommt, weil das nachfolgende Werkzeug noch nicht am Übergabepunkt der Spindel bereitsteht. Daher werden den Werkzeugen Magazinplätze zugeordnete, die zu einer Minimierung dieser Wartezeiten führen.

Werkzeuge haben, neben ihrer eigentlichen Werkzeugeigenschaft, weitere Charakteristika bzw. Eigenschaften. Sie unterscheiden sich z.B. in Größe und Gewicht. Daher haben Regalmagazine unterschiedliche Magazinplatztypen, um die entsprechenden Werkzeuge aufzunehmen. Sind Werkzeuge übergroß, so müssen ein oder eventuell sogar mehrere benachbarte Magazinplätze frei gelassen werden. Weiterhin können in Regalmagazinen auf Grund von Defekten oder baulichen Besonderheiten bestimmte Plätze gesperrt sein. Belegbar ist ein Magazinplatz, wenn dieser frei ist (mit keinem Werkzeug belegt ist) oder frei wird, d.h. es wird ein Werkzeug auf diesen Magazinplatz erst zu einem anderen Magazinplatz gebracht, damit dieser Magazinplatz für das nächstfolgende Werkzeug frei geworden ist oder frei wird. Eine zulässige Magazinbelegung ist eine Anordnung der Werkzeuge im Magazin, so dass jedes Werkzeug sich auf einem belegbaren Magazinplatz befindet und die Platzbedarfe der benachbarten Werkzeuge sich nicht überlappen. Zulässige Magazinplätze hängen von der aktuellen Belegung des Werkzeugmagazins ab. Demnach unterliegen alle zulässigen Magazinplätze, im folgenden auch Magazinpositionen genannt, zusätzlichen Einschränkungen:

- Auf jedem Magazinplatz darf höchstens ein Werkzeug platziert sein.
- Der Platzbedarf des Werkzeugs darf sich nicht mit dem Platzbedarf eines anderen, in der Regel benachbarten Werkzeuges im Magazin überlappen oder über den Rand des Regalmagazins hinausragen.

Eine wartezeitminimale Magazinbelegung hängt von den zu produzierenden Werkstücken und den zugehörigen NC-Programmen ab. Ändert sich die Produktion, so erfordert das eine Anpassung der Magazinbelegung.

In [3] ist bereits eine Umsortierung von Werkzeugen im Magazin vorgeschlagen worden, bei der die Umsortierung eine Aussetzung der Produktion erfordert. In Figur 1 der genannten Patentanmeldung wird auch ein Regalmagazin gezeigt.

Sind eine neue Magazinbelegung sowie eine technisch realisierbare Werkzeugumsetzungs- bzw. Transportreihenfolge gegeben, so kann diese neue Magazinbelegung nach Abschluss des laufenden Programms und vor Start des nachfolgenden Programms konfiguriert werden. D.h., die Produktion ruht, bis die Umsortierung abgeschlossen ist. Dadurch wird die Effizienz der Werkzeugmaschine reduziert. Unter gewissen Voraussetzungen kann man die Umsortierung des Magazins während der Abarbeitung des aktuellen Programms durchführen, ohne zusätzliche Wartezeiten zu erzeugen.

Es wird angenommen, dass die Zeit für das Wechseln eines Werkzeugs in der Werkzeugmaschine im Verhältnis zur Bearbeitungszeit mit einem Werkzeug eher groß ist. Andernfalls entstehen keine Wartezeiten bei der Spindelversorgung und die Magazinbelegung hat keinen Einfluss auf die Effizienz der Werkzeugmaschine. Darüber hinaus wird angenommen, dass die Bearbeitungszeiten der einzelnen Programmschritte unterschiedlich lang sind, so dass auch beim Magazinbediengerät Wartezeiten entstehen.

JPH0929575 offenbart ein Verfahren zur Umsortierung eines Werkzeugmagazins.

Die Aufgabe der Erfindung besteht darin, ein Verfahren und eine Vorrichtung anzugeben, welches die Integration der Werkzeugumsetzung in die Wartezeiten des Magazinbediengeräts ermöglicht.

Diese Aufgabe wird durch die unabhängigen Ansprüche gelöst. Vorteilhafte Weiterbildungen sind Gegenstand der abhängigen Ansprüche.

Die Erfindung beansprucht ein Verfahren zur rechnergestützten Optimierung einer Umsortierung von Werkzeugen während der Produktion in mindestens einem eine Anzahl von Magazinplätzen (P) aufweisenden Werkzeugmagazin, das für eine Werkzeugmaschine verwendet wird oder verwendbar ist, welche zur Bearbeitung von einem oder mehreren Werkstücken mit Hilfe der von einem Magazinbediengerät an einem Bereitstellungsplatz bereitgestellten Werkzeuge eingesetzt wird, aufweisend folgende Schritte:

a) Erfassen einer Menge von Werkzeugen,
b) Erfassen des Platzbedarfs für jedes Werkzeug,
c) Erfassen einer Menge von belegbaren Magazinplätzen für jedes Werkzeug, wobei zumindest eine Teilmenge davon zulässige Magazinplätze umfasst, die abhängig vom jeweiligen Platzbedarf der Werkzeuge und der jeweils zueinander benachbarten Werkzeuge sind,
d) Erfassen einer Menge von Bewegungszeitdauern, die jeweils eine Fahrt des Magazinbediengeräts von einem Magazinplatz zu einem anderen Magazinplatz oder von einem Magazinplatz zum Bereitstellungsplatz oder vom Bereitstellungsplatz zu einem Magazinplatz umfasst,
e) Erfassen einer zulässigen Ausgangsmagazinbelegung, wobei ein Ausgangsmagazinplatz für jedes Werkzeug erfasst wird,
f) Erfassen einer Menge von Werkzeugtransporten von einer Magazinposition zu einer anderen zulässigen Magazinposition, wobei ein Werkzeugtransport aus dieser Menge eine Bewegungszeitdauer benötigt, und Festlegen von Präzedenzen, d. h. einer partiellen Ordnung der Werkzeugtransporte, die erfordert, dass bestimmte Werkzeuge vor anderen Werkzeugen zu ihrem nächsten Magazinplatz transportiert werden,
g) Bestimmen einer Menge von mindestens einem verfügbaren Zeitintervall, wobei ein verfügbares Zeitintervall eine Wartezeit beim Magazinbediengerät während eines Bearbeitungsschrittes des Werkstücks und zwischem dem Ablegen des letzten und dem Aufnehmen des nächsten benötigten Werkzeugs ist,
h) Zuordnen der Werkzeugtransporte aus der Menge von f) zu den Zeitintervallen aus der Menge von g) unter der Bedingung, dass die Bewegungszeitdauer für den Werkzeugtransport kleiner gleich der Länge des Zeitintervalls ist, wobei die Zuordnung mittels gemischt ganzzahliger linearer Optimierung unter Berücksichtigung der partiellen Ordnung der Werkzeugtransporte durchgeführt wird, wobei die partielle Ordnung der Werkzeugtransporte auf eine Kantenmenge E eines Graphen G übertragen, d. h. ein Matching durchgeführt wird, wobei (i, r) genau dann Kante von G ist, wenn der Werkzeugtransport r im Zeitintervall i zeitlich möglich ist, wobei ein maximales bezüglich der Präzedenz abgeschlossenes Matching einer maximalen ausführbaren Sequenz von Werkzeugtransporten entspricht, die während der Wartezeiten des Magazinbediengeräts durchgeführt werden können, wobei Lösung der gemischt ganzzahligen linearen Optimierung das maximale Matching mit Kantenpräzedenzen ist,
i) Durchführen des mindestens einen Werkzeugtransportes während die Werkzeugmaschine für die Bearbeitung eines Werkstücks in Betrieb in einem Bereithaltungszustand oder in einem Bearbeitungszustand ist, sobald die Werkzeugmaschine einen Betriebszustand erreicht, der einem der in g) bestimmten und in h) zugeordneten Zeitintervalle zugewiesen worden ist oder zugewiesen wird.

Eine einmalige oder mehrfache Wiederholung von Schritt i) ist möglich.

Es wird eine partielle Ordnung der Menge der Werkzeugtransporte (siehe f)) so vorgegeben, dass ein noch nicht ausgeführter Werkzeugtransport ausgeführt werden kann, wenn alle in der partiellen Ordnung zuvor angeordneten Werkzeugtransporte ausgeführt worden sind. Die partielle Ordnung beeinflusst die Zuordnung von mindestens einem Werkzeugtransport zu einem Zeitintervall gemäß h). Die zeitliche Abfolge der zugeordneten Zeitintervalle mit der partiellen Ordnung der Werkzeugtransport sollte konsistent sein.

Aus der partiellen Ordnung ergibt sich ein Vorrang eines ersten Werkzeugs, das vor einem zweiten Werkzeug zuerst zu einem anderen freien oder frei werdenden Magazinplatz gebracht werden muss, bevor das zweite Werkzeug auf dessen Magazinplatz gebracht werden kann. Um unauflösbare Zyklen bzw. mögliche Verklemmungen in der Werkzeugtransportreihenfolgen zu vermeiden, können Verklemmungen z.B. durch das Vorgehen aus der eingangs genannten Patentanmeldung PCT/EP2018/074999 aufgelöst werden.

Die genannte Zuordnung des einen oder der mehreren Werkzeugtransporte bzw. -umsetzungen zu einem Zeitintervall wird mittels gemischt ganzzahlig linearer Optimierung durchgeführt, die jeweils in dem nachstehenden Ausführungsbeispielen näher erläutert werden. Die partielle Ordnung wird bei der gemischt ganzzahlig linearen Optimierung berücksichtigt.

Ein Spezialfall von Optimierungsmethoden ist die lineare Optimierung. Sie befasst sich mit der Optimierung linearer Zielfunktionen über einer Menge, die durch lineare Gleichungen und Ungleichungen eingeschränkt ist. Sie ist Grundlage der Lösungsverfahren der (gemischt-) ganzzahligen linearen Optimierung. Ein sogenannter Solver (Löser) ist eine Sammelbezeichnung für spezielle mathematische Computerprogramme, die mathematische Probleme numerisch lösen können. Im Zusammenhang mit MILP (mixed integer linear programming bzw. gemischt ganzzahlige lineare Programmierung) können für IP-Programme (ganzzahlige Optimierungsmodelle) Standardsolver wie z.B. CPLEX [3], Scip, Gurobi, Xpress verwendet werden. Typischerweise wird eine Startkonfiguration vorgegeben, die iterativ mittels Optimierung zu einem Zielergebnis geführt wird. Für eine Startkonfiguration des MILP-Modells kann eine Berechnung aus einer nächstgelegener-Nachbar-Heuristik verwendet werden.

Die Bewegungszeitdauer kann sowohl eine Transportzeitdauer, die eine Fahrt des Magazinbediengeräts mit einem Werkzeug umfasst, als auch eine Leerfahrtzeitdauer einschließen, die eine Fahrt des Magazinbediengeräts ohne Werkzeug bedeutet. Die Transportzeitdauer hängt zusätzlich von Eigenschaften wie z.B. Größe, Gewicht des zu transportierenden Werkzeugs ab.

Die Zeitintervalle, in denen mehrere Werkzeugtransporte möglich sind, können in weitere Zeitintervalle unterteilt werden, in denen möglichst nur ein Werkzeugtransport durchgeführt wird.

Ein weiterer Aspekt der Erfindung betrifft eine Steuereinrichtung zur rechnergestützten Optimierung einer Umsortierung von Werkzeugen während der Produktion in mindestens einem eine Anzahl von Magazinplätzen (P) aufweisendes Werkzeugmagazin, das für eine Werkzeugmaschine verwendet wird oder verwendbar ist, welche zur Bearbeitung von einem oder mehreren Werkstücken mit Hilfe der von einem Magazinbediengerät an einem Bereitstellungsplatz bereitgestellten Werkzeuge eingesetzt wird, aufweisend zumindest eine Verarbeitungseinheit, die zur Ausführung eines Verfahrens nach einem der Ansprüche 1-6 eingerichtet ist.

Die Einheiten, die dazu eingerichtet sind, solche Verfahrensschritte auszuführen, können hardware-, firmware- und/oder softwaremäßig implementiert sein.

Ein weiterer Aspekt der Erfindung ist ein Computerprogramm(produkt) mit Programmcodemitteln zur Durchführung des Verfahrens nach einem der Verfahrensansprüche 1-6, wenn es auf einer Steuereinrichtung der oben genannten Art abläuft oder auf einem computerlesbaren Medium gespeichert ist.

Das Computerprogramm bzw. -produkt kann auf einem computerlesbaren Medium gespeichert sein. Das Computerprogramm bzw. - produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Steuereinrichtung oder in deren Mitteln integriert sein.

Die Steuereinrichtung sowie das Computerprogramm(-produkt) können analog zum oben genannten Verfahren und dessen Weiterbildungen weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.

Figur 1 beispielhaft das eingangs genannte Regalmagazin,
Figur 2 zeigt schematisch ein Ablaufdiagramm zum erfindungsgemäßen Verfahren mit Schritten 1 bis 4, welche wiederholbar sind.

In Figur 1 ist ein Regalmagazin gezeigt. Ein Magazinbediengerät sowie die Werkzeuge, als auch die Benutzung eines Werkzeugs zur Fertigung eines Werkstücks sind nicht dargestellt. Es ist eine nicht dargestellte Steuerungseinrichtung denkbar, die die ebenfalls nicht dargestellte Werkzeugmaschine, welche das Regalmagazin benutzt, steuert. Dabei ist die Steuereinrichtung so ausgebildet, dass diese die nachstehend näher erläuterten Verfahrensschritte ausführen kann bzw. die Werkzeugmaschine mit Magazingerät entsprechend steuert, damit diese die genannten Verfahrensschritte ausführen kann.

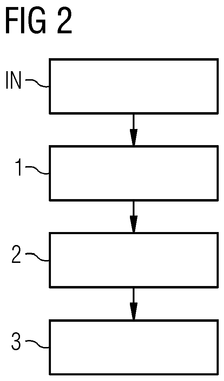

Gemäß Figur 2 ist der Input bzw. die Eingabe IN, die die Menge von Werkzeugen und den Platzbedarf eines jeden Werkzeugs sowie eine zulässige Ausgangsmagazinbelegung umfasst. In Schritt 1 wird eine Menge von verfügbaren Zeitintervallen bestimmt. In einem Zeitintervall beträgt jeweils die Bewegungszeitdauer eines oder mehrerer Werkzeugtransporte maximal die Bearbeitungszeitdauer, in der das am Bereitstellungsplatz bereitgestellten Werkzeug (Spindelwerkzeug) für das Bearbeiten eines Werkstückes benutzt wird.

In Schritt 2 werden ein oder mehrere Werkzeugtransporte jeweils zu einem Zeitintervall unter der Bedingung zugeordnet, dass die Bewegungszeitdauer für den Werkzeugtransport kleiner gleich der Länge des Zeitintervalls ist. In Schritt 3 werden ein oder mehrere Werkzeugtransporte durchgeführt. Dies kann geschehen, während die Werkzeugmaschine für die Bearbeitung eines Werkstücks in Betrieb in einem Bereithaltungszustand oder in einem Bearbeitungszustand ist.

Zudem wird eine Menge von Bewegungszeitdauern, die jeweils eine Fahrt des Magazinbediengeräts von einem Magazinplatz zu einem anderen Magazinplatz oder von einem Magazinplatz zum Bereitstellungsplatz oder vom Bereitstellungsplatz zu einem Magazinplatz umfasst, sowie eine Menge von Werkzeugtransporten von eine Magazinposition bzw. -platz zu einer anderen zulässigen Magazinposition, wobei ein Werkzeugtransport aus dieser Menge eine Bewegungszeitdauer benötigt, als Eingabe IN erfasst.

Der Werkzeugtransport soll jedes Werkzeug kollisionsfrei hinsichtlich seines Platzbedarfs von seinem aktuellen Magazinplatz zu seinem nächsten Magazinplatz transportieren. Hierbei werden Präzedenzen bzw. Vorränge festgelegt, die erfordern, dass bestimmte Werkzeuge vor anderen Werkzeugen zu ihrem nächsten Magazinplatz transportiert werden. Die Definition von Präzedenzen wird nachstehend genauer erläutert.

Im Folgenden wird zunächst eine Basis Heuristik und die Schritte des erfindungsgemäßen Vorgehens näher erläutert: Basis Heuristik

Notation:

Zur Vereinfachung der Beschreibung des Verfahrens wird die im Folgenden beschriebene Notation verwendet.

Indexmengen

$\mathcal{J}$  Menge der verfügbaren Zeitintervalle

$\mathcal{R}$  Menge der Werkzeugumsetzungen

$\mathcal{L}$  Menge der zulässigen Magazinpositionen

Parameter

$T_i^s, T_i^f$  Start-, Endzeitpunkt von Intervall $i \in \mathcal{J}$

$L_i^s, L_i^f$  Mögliche Start-, Endpositionen von Intervall $i \in \mathcal{J}$

$W_r^t$  Werkzeug der Umsetzung $r \in \mathcal{R}$

$W_r^s$  Bisherige Magazinposition von Werkzeug $W_r^t$ für Umsetzung $r \in \mathcal{R}$

$W_r^f$  Neue Magazinposition von Werkzeug $W_r^t$ für Umsetzung $r \in \mathcal{R}$

$\texttt{moveTime}_{l,l'}^t$  Fahrzeit zur Umsetzung des Werkzeugs $t$ von Position $l$ auf Position $l'$

$\text{moveTime}_{l,l'}$  Fahrzeit einer Leerfahrt von Position $l$ zu Position $l'$

$\text{loc}(t)$  Menge aller Magazinposition von Werkzeug $t$ während der Werkzeugumsetzungen

$l^0$  Position des Übergabeplatzes zur Spindel

$\rho$ Maximale Zeit einer Folge von Leer- und Werkzeugumsetzungsfahrt Parameter, $\lambda \approx 2$, zur Definition von $\lambda$-lazy Operationen

Seien $t_1$ und $t_2$ zwei Werkzeuge, die während der Operation **o** am Übergabeplatz ausgetauscht werden. Die Zeit zum Zurückbringen des Werkzeugs $t_1$ an seinen Magazinplatz, der Leerfahrt des Magazinbediengeräts zum Platz des nachfolgenden Werkzeugs $t_2$ und den Transport dieses Werkzeugs zum Übergabeplatz wird als Zyklenzeit bezeichnet. Sie ist von den Magazinplätzen der beiden Werkzeuge $t_1$ und $t_2$ abhängig und beträgt im Allgemeinen einige Sekunden. Ist die Bearbeitungszeit der Operation **o** kürzer als die maximale Zyklenzeit des Magazinbediengeräts, so wird **o** *kritische* Operation genannt. **o** heißt *λ-lazy* wenn die Bearbeitungszeit von **o** größer als das $\lambda$-Fache der maximalen Zyklenzeit ist, $\lambda > 1$. Das Werkzeugpaar (**$t_1,t_2$**) wird analog als *kritisches* bzw. *λ-lazy* Tupel bezeichnet. Für $\lambda = 2$ ist die Wartezeit z.B. ausreichend groß, um eine beliebige Werkzeugumsetzung während der Bearbeitung von **o** durchzuführen.

Bestimmung der verfügbaren Zeitintervalle:

Zur Umsortierung der Werkzeuge während der Produktion, ohne das zusätzliche Auftreten von Stillstandszeiten, sind Wartezeiten beim Magazinbediengerät notwendig. Diese Wartezeit, zwischen dem Ablegen des letzten und dem Aufnehmen des nächsten benötigten Werkzeugs, steht für weitere Operationen des Magazinbediengeräts zur Verfügung.

Sei $\lambda \approx 2$ und $o_i$, $i = 1, \dots n$, die Menge der $\lambda$-lazy Operationen aufsteigend sortiert nach ihrer Startzeit. Die Spindelwerkzeuge vor und nach Operation $o_i$ seien $t_i^s$ und $t_i^f$. D.h., die Werkzeuge $t_i^s$ und $t_i^f$ werden während der Operation $o_i$ am Übergabeplatz ausgetauscht. Die Menge der verfügbaren Zeitintervalle $\mathcal{J}$ sei

$$\mathcal{J} = \{1, \dots, n\} \qquad (1)$$

wobei die möglichen Start- und Endpositionen bzw. Zeitpunkte für Zeitintervall i gegeben sind durch:

$$L_i^s = loc(t_i^s)$$

$$L_i^f = loc(t_i^f)$$

$$T_i^s = Startzeit\ von\ o_i + \max\left\{moveTime_{l^0,l}^{t_i^s} \middle| l \in L_i^s\right\}$$

$$T_i^f = Endzeit\ von\ o_i - \max\left\{moveTime_{l^0,l}^{t_i^f} \middle| l \in L_i^f\right\}$$ Reihenfolge der Werkzeugumsetzungen:

Sind die aktuelle und die gewünschte nachfolgende Zuordnung von Werkzeugen zu Magazinposition gegeben, so ist noch festzulegen, in welcher Reihenfolge die Werkzeuge umgesetzt werden sollen. Es wird angenommen, dass jedes Werkzeug direkt von seiner aktuellen Magazinposition zur nachfolgenden Magazinposition umgesetzt wird. Durch die Fixierung der Ausgangsbelegung- und der Zielbelegung des Magazins können die zwei folgenden Fälle eintreten:

1. Einige Werkzeuge müssen zuerst von ihrem ursprünglichen Magazinplatz wegtransportiert werden, bevor ein anderes Werkzeug darauf platziert werden kann.
2. Es existieren zyklische Abhängigkeiten, d.h. ein Werkzeug muss von seinem ursprünglichen Magazinplatz wegtransportiert werden, damit es selbst umgesetzt werden kann.

Im ersten Fall werden Präzedenzen zwischen den Werkzeugumsetzungen definiert, d.h., die Werkzeugumsetzungen sind partiell geordnet. Die Umsetzung **r'** ist kleiner als **r**, **r' ≺ r**, wenn **r'** zwingend vor **r** umgesetzt werden muss. Sind **r'** und **r** nicht vergleichbar, d.h. es gilt weder **r' ≺ r** noch **r ≺ r'**, so kann die Umsetzung von **r** und **r'** in beiden Reihenfolgen durchgeführt werden.

Im zweiten Fall ist es unter Umständen gar nicht möglich, die gewünschte Zuordnung nur durch Umsetzen von Werkzeugen zu erreichen, z.B. bei Regalmagazinen mit wenigen freien Plätzen und Werkzeugen, die mehr als einen Magazinplatz benötigen. Falls zyklische Abhängigkeiten auftreten, so sollten diese entfernt werden.

Entfernung von Transportzyklen: Transportzyklen können auf verschiedene Arten entfernt werden. Eine unmittelbare Entfernung wird erreicht, indem die Zielmagazinbelegung angepasst wird. Dieses Vorgehen kann aus der eingangs genannten Patentanmeldung entnommen werden und auch in diesem Kontext angewendet werden. Eventuelle Transportzyklen können effizient mittels einer Tiefensuche in polynomialer Laufzeit gefunden werden. Alle Werkzeuge in einem Zyklus werden nicht umgesetzt, sondern verbleiben auf ihrem Platz. Ebenso werden alle Werkzeuge, welche vorher die Umsetzung eines Werkzeugs aus einem Zyklus erfordern, nicht umgesetzt und verbleiben an ihrem Platz. Die so geänderte nachfolgende Zuordnung von Werkzeugen zu Magazinposition enthält keine zyklischen Abhängigkeiten mehr und die Werkzeugumsetzungen sind partiell geordnet.

Alternativ kann die Einschränkung, dass jedes Werkzeug direkt von seiner aktuellen Magazinposition zu seiner endgültigen Magazinposition transportiert wird, aufgehoben werden. Ein Werkzeug kann so mehrmals umgesetzt werden und diese zusätzliche Freiheit ermöglicht es im Allgemeinen, eine zyklenfreie Menge von Werkzeugumsetzungen zu finden. In der entsprechenden partiellen Ordnung sind alle Werkzeugumsetzungen für ein und dasselbe Werkzeug total geordnet. Bei Magazinen mit sehr wenigen freien Plätzen und vielen Werkzeugen, die mehr als einen Regalplatz benötigen, kann es trotzdem notwendig sein, dass Werkzeuge aus dem Magazin entfernt werden müssen, um die gewünschte nachfolgende Magazinbelegung herstellen zu können.

Im Folgenden wird angenommen, dass eine partiell geordnete Menge von Werkzeugumsetzungen ohne zyklische Abhängigkeiten gegeben ist.

Modellierung der Werkzeugumsetzung:

Sei $G = (\mathcal{J} \cup \mathcal{R}, E)$ ein bipartiter Graph mit den Knotenpartitionen $\mathcal{J}$ und $\mathcal{R}$ und der Kantenmenge **E**. Wobei (**i, r**) genau dann Kante von *G* ist, wenn die Umsetzung von Werkzeug $W_r^t$ im Zeitintervall *i* zeitlich möglich ist, d.h. Werkzeug $W_r^t$ ist im Zeitintervall *i* nicht Spindelwerkzeug und folgende Ungleichung ist erfüllt:

$$\max\left\{\text{moveTime}_{l, W_r^s}\middle| l \in L_i^s\right\} + moveTime_{W_r^s, W_r^f}^{W_r^t} + \max\left\{\text{moveTime}_{W_r^f, l}\middle| l \in L_i^f\right\} \leq$$
$$T_i^f - T_i^s \qquad (2)$$

Die partielle Ordnung von $\mathcal{R}$ wird auf die Kantenmenge **E** des Graphen *G* übertragen. Für zwei Kanten (**i,r**), (**i',r'**) ∈ **E** gilt:

$$(i', r') \prec (i, r) \leftrightarrow T_{i'}^f < T_i^s \wedge r' \prec r \qquad (3)$$

Ein Matching **M** des Graphen **G** ist bezüglich ≺-abgeschlossen, wenn für alle Kanten (*i,r*) ∈ *M* gilt:

$$r' \prec r \rightarrow \exists (i', r') \in M : (i', r') \prec (i, r) \qquad (4)$$

Jedes ≺-abgeschlossene Matching **M** definiert eine ausführbare Sequenz von Werkzeugumsetzungen $\mathcal{R}_M = \{r \mid (i,r) \in M\}$. Ein maximales ≺-abgeschlossenes Matching entspricht somit einer maximalen ausführbaren Sequenz von Werkzeugumsetzungen, die während der Wartezeiten des Magazinbediengeräts durchgeführt werden können. Die Maximalität gilt unter den Annahmen, dass immer nur eine Umsetzung während einer Wartezeit erfolgt und, dass die während Intervall *i* am Bereitstellungs- bzw. Übergabeplatz ausgetauschten Werkzeuge an ihren ursprünglichen Plätzen im Magazin verbleiben.

Modellierung als MIP

Die Bestimmung eines Matching mit Kantenpräzedenzen kann als ganzzahliges lineares Programm (MIP) modelliert werden. Aufbauend auf die oben eingeführte Notation werden folgende Variablen definiert:

| Variablen | |
| --- | --- |
| $x_{(i,r)}$ | Indikatorvariable, ob Kante (*i,r*) ∈ **E** im Matching ist |

(fortgesetzt)

Ein maximales Matching mit Kantenpräzedenzen ist Lösung des ganzzahligen linearen Programms mit der Zielfunktion

$$max \sum_{(i,r)\in E} x_{(i,r)} \qquad (5)$$

unter Berücksichtigung der folgenden Nebenbedingungen:

$$\sum_{r\in R:(i,r)\in E} x_{(i,r)} \le 1, \qquad i \in \mathcal{J} \qquad (6)$$

$$\sum_{i\in\mathcal{J}:(i,r)\in E} x_{(i,r)} \le 1, \qquad r \in R \qquad (7)$$

$$x_{(i,r)} \le \sum_{\substack{i'\in\mathcal{J}:\\(i',r')\in E\\(i',r')\prec(i,r)}} x_{(i',r')}, \quad (i,r) \in E, r' \prec r \qquad (8)$$

$$x_{(i,r)} \in \{0, 1\}, \qquad (i,r) \in E \qquad (9)$$

Für eine zulässige Lösung $x$ sei $M_x = \{(i,r) \mid x_{(i,r)} = 1\} \subset E$ die Menge der Kanten deren Indikatorvariable x gleich 1 ist. Die Ungleichungen (6) und (7) garantieren, dass keine zwei Kanten aus $M_x$ einem Intervall $i$ bzw. einer Werkzeugumsetzung $r$ zugeordnet werden, d.h. $M_x$ ist ein Matching. Die Ungleichungen (8) stellen sicher, dass das Matching $M_x$ bzgl. <abgeschlossen ist. Somit ist $\mathcal{R}_{M_x}$ eine ausführbare Sequenz von Werkzeugumsetzungen, die letztlich konsistent zur oben genannten partiellen Ordnung ist.

Es gibt kommerzielle und frei verfügbare Solver, um gemischt ganzzahlige lineare Programme zu lösen [2,3]. D.h., diese Solver können für das oben beschriebene ganzzahlige lineare Programm für gegebene Werte der Koeffizienten und ohne weiteren Eingriff des Nutzers, eine Lösung berechnen. Somit lassen sich maximale Sequenzen von Werkzeugumsetzungen berechnen, welche während der Wartezeiten des Magazinbediengeräts ausgeführt werden.

Erweiterungen der Heuristik

Berücksichtigung des Programmfortschritts:

Ein maximales <-abgeschlossenes Matching entspricht einer ausführbaren Sequenz von Werkzeugumsetzungen. Die Umsetzungen können jedoch schon zu Beginn des aktuell laufenden Programms beginnen. Dadurch wird die für dieses Programm bestimmte wartezeitminimale Magazinbelegung verändert und es kann während der Produktion zu Wartezeiten kommen, die ursprünglich vermieden wurden. Zur Vermeidung dieses unerwünschten Effekts wird die Zielfunktion modifiziert. Mit anderen Worten ausgedrückt, werden die Werkzeugtransporte im zunehmenden Zeitverlauf mit zunehmender Gewichtung bei der Durchführung des einen Werkzeugtransportes berücksichtigt, vorausgesetzt, dass die kumulierte Wartezeit im zunehmenden Zeitverlauf auf das Magazinbediengerät durch einen neu zugeordneten Magazinplatz des Werkzeugs nach dem Werkzeugtransport, abnimmt.

| Indexmengen | |
|---|---|
| **T** | Menge der Werkzeuge, die in einem kritischen Tupel enthalten sind |
| $\mathcal{F}(t)$ | Menge der Nutzungsendzeitpunkte von Werkzeug **t** in einem kritischen Tupel |

Sei $w: \mathcal{I} \times \mathcal{R} \to \mathbb{R}$ eine Gewichtsfunktion auf den Kanten **E** des Graphen **G**. Die Werte von **w** seien wie folgt definiert:

$$w(i,r) = \begin{cases} -1 & \text{falls } W_r^t \in T \wedge T_i^f < \max \mathcal{F}(t) \\ 1 & \text{falls } W_r^t \in T \wedge T_i^f \geq \max \mathcal{F}(t) \\ 0 & \text{sonst} \end{cases} \qquad (10)$$

Mit Hilfe der Gewichtsfunktion **w** kann die obige Zielfunktion (5) des ganzzahligen Programms umformuliert werden:

$$max \sum_{(i,r) \in E} w(i,r)\, x_{(i,r)} \qquad (11)$$

Dadurch geht eine Matchingkante **(i,r)** nur dann positiv in die Zielfunktion ein, wenn die zugeordnete Werkzeugumsetzung **r** erst nach der letztmaligen Nutzung des Werkzeugs $W_r^t$ in einem kritischen Tupel abgeschlossen ist.

Wird hingegen das Werkzeug $W_r^t$ noch nach dem Umsetzungsintervallende $T_i^f$ noch in einem kritischen Tupel verwendet, so trägt die Matchingkante **(i,r)** negativ zum Gewicht des Matchings bei.

Gewichtete Berücksichtigung des Programmfortschritts:

Die Zielfunktion (11) gewichtet alle Zeitpunkte vor (nach) der letzten Nutzung eines Werkzeugs aus einem kritischen Tupel gleich. Dadurch wird nicht berücksichtigt, dass eine einzelne kurze Wartezeit vor dem Programmende weniger relevant ist.

Sei $\omega$**(i,r)** eine Schätzung der zusätzlichen Wartezeit im aktuellen Programm, wenn das Werkzeug $W_r^t$ zurzeit $T_i^s$ umgesetzt wird. $\Omega$ sei ein Skalierungsparameter und die Gewichtsfunktion $\tilde{w}: \mathcal{I} \times \mathcal{R} \to \mathbb{R}$ auf den Kanten **E** des Graphen **G** wie folgt definiert:

$$\tilde{w}(i,r) = 1 - \frac{w(i,r)}{\Omega}$$

Wird $\Omega$ etwa in der Größe der durchschnittlichen Wartezeiteinsparung je Werkzeug aus einem kritischen Tupel gewählt, so hat **(i,r)** ein negatives Gewicht $\tilde{w}$**(i,r),** wenn eine Umsetzung von $W_r^t$ zur Zeit $T_i^s$ geschätzt mehr zusätzliche Wartezeit während des aktuell laufenden Programms erfordert, als durchschnittlich pro Werkzeug durch die Umsetzung eingespart wird. Die Schätzungen müssen nicht akkurat sein, wichtig ist nur, dass die relativen Verhältnisse zwischen verschiedenen Werkzeugumsetzungen **r** und **r'** und die Abnahme mit dem Programmfortschritt zusammenpassen. Bei passender Wahl des Skalierungsparameters $\Omega$, kann daher die Zielfunktion (5) des ganzzahligen Programms aus Abschnitt 4.5 durch die folgende Zielfunktion (12) ersetzt werden.

$$max \sum_{(i,r) \in E} \tilde{w}(i,r)\, x_{(i,r)} \qquad (12)$$

Mehrere Intervalle:

Die obige Modellierung ermöglicht maximal eine Werkzeugumsetzung in der Wartezeit des Magazinbediengeräts während einer Operation. Enthält das Programm längere Operationen und somit längere Wartezeiten des Magazinbediengeräts, so können die Lösungen, mit nur einer Umsetzung, sehr ungünstig sein. Für diesen Fall kann die Modellierung erweitert werden.

Bei der Bestimmung der Zeitintervalle wird jeder λ-lazy Operation ein Intervall zugeordnet. Sehr lange Zeitintervalle, die mehrere Werkzeugumsetzungen beinhalten können, werden im Folgenden aufgeteilt in mehrere kleinere Zeitintervalle, in den möglichst nur eine Werkzeugumsetzung bzw. -transport durchgeführt wird.

Sei $\rho$ die maximale Fahrzeit einer Leer- und einer Werkzeugumsetzungsfahrt, d.h.

$$\rho = \max\left\{\text{moveTime}_{l,W_r^s} + \text{moveTime}_{W_r^s,W_r^f}^{W_r^t} \mid r \in R, l \in \mathcal{L}\right\} \qquad (13)$$

Ein Zeitintervall $i \in \mathcal{J}$ heißt *langes Zeitintervall*, wenn für ein **k = 2,3,...** gilt

$$T_i^f - T_i^s \geq k\rho + \max\{\text{moveTime}_{l,l'} \mid l, l' \in \mathcal{L}\} \qquad (14)$$

Sei *i* ein langes Zeitintervall und *k* maximal, so dass die Ungleichung (14) gilt. Das Intervall *i* wird in *k* Intervalle mit einer Länge von $\rho$ und $\rho + \max_{l,l' \in \mathcal{L}} \text{moveTime}_{l,l'}$ unterteilt. Die Startzeit (möglichen Startpositionen) des ersten und die Endzeit (möglichen Endpositionen) des letzten neuen Intervalls sind $T_i^s$ ($L_i^s$) bzw. $T_i^f$ ($L_i^f$). Die Zwischenzeiten und Zwischenpositionen sind abhängig von der Wahl der Werkzeugumsetzung, die für das vorhergehende Zeitintervall ausgewählt wurde. Da die Intervalle alle mindestens die Länge $\rho$ haben, kann jede Folge von einer Leerfahrt und einer Werkzeugumsetzung in dem Intervall durchgeführt werden. Im letzten Zeitintervall kann zusätzlich noch eine Leerfahrt zu einer beliebigen Position aus $L_i^f$ durchgeführt werden. Diese Aufteilung wird für jedes lange Zeitintervall durchgeführt. Die resultierende Intervallmenge sei $\mathcal{J}'$.

Der bipartite Graph wird auf $\mathcal{J}'$ erweitert. Da in den neu erzeugten Teilintervallen jede Werkzeugumsetzung möglich ist, werden für diese Intervalle *i'* alle Kanten (*i'*,*r*) in den Graphen **G** eingefügt für die $W_r^t$ nicht das Spindelwerkzeug, während des Zeitintervalls *i* ist. Für die unveränderten Zeitintervalle *i* und Werkzeugumsetzungen *r* wird weiterhin das obige Kriterium (2) angewendet. Dieser erweiterte bipartite Graph hat ebenfalls die Eigenschaft, dass jedes <-abgeschlossene Matching einer ausführbaren Sequenz von Werkzeugumsetzungen entspricht.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Referenzen:

1. PCT/EP2018/074999
2. The SCIP Optimization Suite 5.0; Ambros Gleixner, Leon Eifler, Tristan Gally, Gerald Gamrath, Patrick Gemander, Robert Lion Gottwald, Gregor Hendel, Christopher Hojny, Thorsten Koch, Matthias Miltenberger, Benjamin Müller, Marc E. Pfetsch, Christian Puchert, Daniel Rehfeldt, Franziska Schlösser, Felipe Serrano, Yuji Shinano, Jan Merlin Viernickel, Stefan Vigerske, Dieter Weninger, Jonas T. Witt, Jakob Witzig, ZIB-Report 17-61, Zuse Institute Berlin, December 2017; http://scip.zib.de.
3. IBM ILOG CPLEX MIP Optimizer; https://www.ibm.com.
4. Andreas Hirsch; Werkzeugmaschinen: Grundlagen, Auslegung, Ausführungsbeispiele, 2. Aufl., Springer Vieweg | Springer Fachmedien Wiesbaden 2012, S. 2; https://doi.org/10.1007/978-3-8348-2364-9.

**Patentansprüche**

**1.** Verfahren zur rechnergestützten Optimierung einer Umsortierung von Werkzeugen während der Produktion in mindestens einem eine Anzahl von Magazinplätzen (P) aufweisenden Werkzeugmagazin, das für eine Werkzeugmaschine verwendet wird oder verwendbar ist, welche zur Bearbeitung von einem oder mehreren Werkstücken mit Hilfe der von einem Magazinbediengerät an einem Bereitstellungsplatz bereitgestellten Werkzeuge eingesetzt wird, aufweisend folgende Schritte:

a) Erfassen einer Menge von Werkzeugen,
b) Erfassen des Platzbedarfs für jedes Werkzeug,
c) Erfassen einer Menge von belegbaren Magazinplätzen für jedes Werkzeug, wobei zumindest eine Teilmenge davon zulässige Magazinplätze umfasst, die abhängig vom jeweiligen Platzbedarf der Werkzeuge und der jeweils zueinander benachbarten Werkzeuge sind,
d) Erfassen einer Menge von Bewegungszeitdauern, die jeweils eine Fahrt des Magazinbediengeräts von einem Magazinplatz zu einem anderen Magazinplatz oder von einem Magazinplatz zum Bereitstellungsplatz oder vom Bereitstellungsplatz zu einem Magazinplatz umfasst,
e) Erfassen einer zulässigen Ausgangsmagazinbelegung, wobei ein Ausgangsmagazinplatz für jedes Werkzeug erfasst wird,
f) Erfassen einer Menge von Werkzeugtransporten von einer Magazinposition zu einer anderen zulässigen Magazinposition, wobei ein Werkzeugtransport aus dieser Menge eine Bewegungszeitdauer benötigt, und Festlegen von Präzedenzen, d. h. einer partiellen Ordnung der Werkzeugtransporte, die erfordert, dass bestimmte Werkzeuge vor anderen Werkzeugen zu ihrem nächsten Magazinplatz transportiert werden,
g) Bestimmen einer Menge von mindestens einem verfügbaren Zeitintervall, wobei ein verfügbares Zeitintervall eine Wartezeit beim Magazinbediengerät während eines Bearbeitungsschrittes des Werkstücks und zwischen dem Ablegen des letzten und dem Aufnehmen des nächsten Werkzeugs ist,
h) Zuordnen der Werkzeugtransporte aus der Menge von f) zu den Zeitintervallen aus der Menge von g) unter der Bedingung, dass die Bewegungszeitdauer für den Werkzeugtransport kleiner gleich der Länge des Zeitintervalls ist, wobei die Zuordnung mittels gemischt ganzzahliger linearer Optimierung unter Berücksichtigung der partiellen Ordnung der Werkzeugtransporte durchgeführt wird, wobei die partielle Ordnung der Werkzeugtransporte auf eine Kantenmenge E eines Graphen G übertragen, d. h. ein Matching durchgeführt wird, wobei (i, r) genau dann Kante von G ist, wenn der Werkzeugtransport r im Zeitintervall i zeitlich möglich ist, wobei ein maximales bezüglich der Präzedenz abgeschlossenes Matching einer maximalen ausführbaren Sequenz von Werkzeugtransporten entspricht, die während der Wartezeiten des Magazinbediengeräts durchgeführt werden können, wobei Lösung der gemischt ganzzahligen linearen Optimierung das maximale Matching mit Kantenpräzedenzen ist,
i) Durchführen des mindestens einen Werkzeugtransportes während die Werkzeugmaschine für die Bearbeitung eines Werkstücks in Betrieb in einem Bereithaltungszustand oder in einem Bearbeitungszustand ist, sobald die Werkzeugmaschine einen Betriebszustand erreicht, der einem der in g) bestimmten und in h) zugeordneten Zeitintervalle zugewiesen worden ist oder zugewiesen wird.

2. Verfahren nach Anspruch 1, **dadurch gekennzeichnet, dass** die partielle Ordnung der Menge der Werkzeugtransporte so vorgegeben ist, dass ein noch nicht ausgeführter Werkzeugtransport ausgeführt werden kann, wenn alle in der partiellen Ordnung zuvor angeordneten Werkzeugtransporte ausgeführt worden sind.

3. Verfahren nach Anspruch 1 oder 2, **dadurch gekennzeichnet, dass** die zeitliche Abfolge der zugeordneten Zeitintervalle mit der partiellen Ordnung der Werkzeugtransport konsistent ist.

4. Verfahren nach einem der vorhergehenden Ansprüche, **dadurch gekennzeichnet, dass** eine Bewegungszeitdauer sowohl eine Transportzeitdauer, die eine Fahrt des Magazinbediengeräts mit einem Werkzeug umfasst, als auch eine Leerfahrtzeitdauer einschließt, die eine Fahrt des Magazinbediengeräts ohne Werkzeug umfasst.

5. Verfahren nach dem vorhergehenden Anspruch, **dadurch gekennzeichnet, dass** die Transportzeitdauer zusätzlich von Eigenschaften des zu transportierenden Werkzeugs abhängt.

6. Verfahren nach einem der vorhergehenden Ansprüche, **dadurch gekennzeichnet, dass** die Zeitintervalle, in denen mehrere Werkzeugtransporte möglich sind, in weitere Zeitintervalle unterteilt werden, in denen möglichst nur ein Werkzeugtransport durchgeführt wird.

7. Steuereinrichtung zur rechnergestützten Optimierung einer Umsortierung von Werkzeugen während der Produktion in mindestens einem eine Anzahl von Magazinplätzen (P) aufweisendes Werkzeugmagazin, das für eine Werkzeugmaschine verwendet wird oder verwendbar ist, welche zur Bearbeitung von einem oder mehreren Werkstücken mit Hilfe der von einem Magazinbediengerät an einem Bereitstellungsplatz bereitgestellten Werkzeuge eingesetzt wird, aufweisend zumindest eine Verarbeitungseinheit, die zur Ausführung eines Verfahrens nach einem der vorhergehenden Ansprüche eingerichtet ist.

8. Computerprogrammprodukt mit Programmcode zur Durchführung des Verfahrens nach einem der vorangehenden Verfahrensansprüche 1-6, wenn es auf einer Steuereinrichtung nach Anspruch 7 abläuft oder auf einem computerlesbaren Medium gespeichert ist.

## Claims

1. Method for the computer-aided optimization of a re-sorting of tools during production in at least one tool magazine having a number of magazine locations (P), which is used or is usable for a machine tool that is employed for the processing of one or more workpieces with the aid of the tools provided by a magazine operating apparatus at a provision location,
having the following steps:

   a) recording a set of tools,
   b) recording the space requirement for each tool,
   c) recording a set of occupiable magazine locations for each tool, at least one subset thereof comprising allowed magazine locations which are dependent on the respective space requirement of the tools and of the tools respectively neighbouring one another,
   d) recording a set of movement time durations which respectively comprises a trip of the magazine operating apparatus from one magazine location to another magazine location or from a magazine location to the provision location or from the provision location to a magazine location,
   e) recording an allowed initial magazine occupancy, an initial magazine location for each tool being recorded,
   f) recording a set of tool transports from one magazine position to another allowed magazine position, a tool transport from this set requiring a movement time duration, and defining precedences, that is to say a partial order of the tool transports that requires particular tools to be transported before other tools to their next magazine location,
   g) determining a set of at least one available time interval, an available time interval being a waiting time in the magazine operating apparatus during a step of processing the workpiece and between depositing the last tool and taking up the next tool,
   h) allocating the tool transports from the set of f) to the time intervals from the set of g) under the condition that the movement time duration for the tool transport is less than or equal to the length of the time interval, the allocation being carried out by means of mixed integer linear optimization, taking into account the partial order of the tool transports, the partial order of the tool transports being applied to an edge set E of a graph G, that is to say a matching is carried out, where (i, r) is the edge of G precisely when the tool transport r is chronologically possible in the time interval i, where a maximum matching that is bounded with respect to the precedence corresponds to a maximum performable sequence of tool transports that can be carried out during the waiting times of the magazine operating apparatus, the solution to the mixed integer linear optimization being the maximum matching with edge precedences,

i) carrying out the at least one tool transport while the machine tool for the processing of a workpiece is in operation in a ready state or in a processing state, as soon as the machine tool reaches an operating state which has been assigned or is assigned to one of the time intervals determined in g) and allocated in h).

2. Method according to Claim 1, **characterized in that** the partial order of the set of tool transports is specified such that a tool transport that has not yet been performed may be performed when all tool transports previously arranged in the partial order have been performed.

3. Method according to Claim 1 or 2, **characterized in that** the chronological succession of the allocated time intervals is consistent with the partial order of the tool transports.

4. Method according to one of the preceding claims, **characterized in that** a movement time duration includes both a transport time duration, which comprises a trip of the magazine operating apparatus with a tool, and an empty trip time duration, which comprises a trip of the magazine operating apparatus without a tool.

5. Method according to the preceding claim, **characterized in that** the transport time duration additionally depends on properties of the tool to be transported.

6. Method according to one of the preceding claims, **characterized in that** the time intervals in which a plurality of tool transports are possible are subdivided into further time intervals in which, if possible, only one tool transport is carried out.

7. Control instrument for the computer-aided optimization of a re-sorting of tools during production in at least one tool magazine having a number of magazine locations (P), which is used or is usable for a machine tool that is employed for the processing of one or more workpieces with the aid of the tools provided by a magazine operating apparatus at a provision location, having at least one processing unit which is designed to perform a method according to one of the preceding claims.

8. Computer program product having program code for carrying out the method according to one of the preceding Method Claims 1-6 when it runs on a control instrument according to Claim 7 or is stored on a computer-readable medium.

**Revendications**

1. Procédé d'optimisation assistée par ordinateur d'un réarrangement d'outils, lors de la production, dans au moins un magasin d'outils présentant un éventail d'espaces de magasin (P), qui est utilisé ou utilisable pour une machine-outil servant au traitement d'au moins une pièce à l'aide des outils préparés par une unité de commande de magasin à un espace de préparation, présentant les étapes suivantes :

a) établissement d'une quantité d'outils,
b) établissement du besoin d'espace pour chaque outil,
c) établissement d'une quantité d'espaces de magasin occupables pour chaque outil, dont au moins une quantité partielle comprend des espaces de magasin autorisés qui dépendent du besoin de place respectif des outils et des outils respectivement voisins les uns des autres,
d) établissement d'une quantité de durées de déplacement, qui comprend respectivement un trajet de l'unité de commande de magasin depuis un espace de magasin à un autre espace de magasin ou d'un espace de magasin à l'espace de préparation ou de l'espace de préparation à un espace de magasin,
e) établissement d'une occupation autorisée initiale de magasin, un espace initial de magasin étant établi pour chaque outil,

f) établissement d'une quantité de transferts d'outils d'une position de magasin à une autre position de magasin autorisée, un transfert d'outils de cette quantité nécessitant une durée de déplacement, et détermination de précédents, c'est-à-dire d'un ordre partiel des transferts d'outils, ce qui nécessite que des outils déterminés soient transférés avant d'autres outils à leur espace de magasin suivant,

g) détermination d'une quantité d'au moins un intervalle de temps disponible, un intervalle de temps disponible étant un temps d'attente au niveau de l'unité de commande de magasin pendant une étape de traitement de la pièce et entre le positionnement du dernier outil et l'enlèvement de l'outil suivant,

h) affectation des transferts d'outils de la quantité de f) aux intervalles de temps de la quantité de g) à la condition que la durée de transfert pour le transfert d'outils ne soit pas inférieure ou égale à la durée de l'intervalle de temps, l'affectation étant effectuée au moyen d'une optimisation linéaire en nombres entiers en prenant en compte l'ordre partiel des transferts d'outils, l'ordre partiel des transferts d'outils étant affecté à une quantité d'arête E d'un graphe G, c'est-à-dire qu'on effectue un couplage, dans lequel (i, r) est précisément une arête de G si le transfert d'outils r est chronologiquement possible dans l'intervalle de temps i, un couplage déterminé maximal par rapport aux précédents correspondant à une séquence réalisable maximale de transferts d'outils que l'on peut effectuer pendant les temps d'attente de l'unité de commande de magasin, dans lequel une solution de l'optimisation linéaire en nombres entiers est le couplage maximal avec précédents d'arêtes,

i) réalisation de l'au moins un transfert d'outils pendant que la machine-outil est en fonctionnement pour le traitement d'une pièce dans un état de préparation ou dans un état de traitement, dès l'instant où la machine-outil atteint un état de fonctionnement qui est ou a été attribué à l'un des intervalles de temps déterminés en g) ou affectés en h).

2. Procédé selon la revendication 1, **caractérisé en ce que** l'ordre partiel de la quantité des transferts d'outils est prévu de sorte qu'on puisse effectuer un transfert d'outil non encore effectué lorsque tous les transferts d'outils précédemment agencés dans l'ordre partiel ont été effectués.

3. Procédé selon la revendication 1 ou 2, **caractérisé en ce que** la succession chronologique des intervalles de temps affectés est cohérente avec l'ordre partiel du transfert d'outils.

4. Procédé selon l'une des revendications précédentes, **caractérisé en ce qu'**une durée de déplacement comprend à la fois une durée de transfert, qui comprend un trajet de l'unité de commande de magasin avec un outil, et une durée de trajet à vide, qui comprend un trajet de l'unité de commande de magasin sans outil.

5. Procédé selon l'une des revendications précédentes, **caractérisé en ce que** la durée de trajet dépend en plus de propriétés de l'outil à transporter.

6. Procédé selon l'une des revendications précédentes, **caractérisé en ce que** les intervalles de temps dans lesquels plusieurs transferts d'outils sont possibles sont divisés en plusieurs intervalles de temps dans lesquels, autant que possible, un seul transfert d'outil peut être effectué.

7. Dispositif de commande pour l'optimisation assistée par ordinateur d'un réarrangement d'outils, lors de la production, dans au moins un magasin d'outils présentant un éventail d'espaces de magasin (P), qui est utilisé ou utilisable pour une machine-outil servant au traitement d'au moins une pièce à l'aide des outils préparés par une unité de commande de magasin à un espace de préparation, présentant au moins une unité de traitement conçue pour réaliser un procédé selon l'une des revendications précédentes.

8. Produit de programme informatique avec un code de programme pour effectuer le procédé selon l'une des revendications 1 à 6 s'il tourne sur un dispositif d'enregistrement selon la revendication 7 ou est enregistré sur un support lisible par ordinateur.

# FIG 1
Stand der Technik

FIG 2

## IN DER BESCHREIBUNG AUFGEFÜHRTE DOKUMENTE

**In der Beschreibung aufgeführte Patentdokumente**

• EP 2018074999 W

**In der Beschreibung aufgeführte Nicht-Patentliteratur**

• **AMBROS GLEIXNER** ; **LEON EIFLER** ; **TRISTAN GALLY** ; **GERALD GAMRATH** ; **PATRICK GE-MANDER** ; **ROBERT LION GOTTWALD** ; **GREGOR HENDEL** ; **CHRISTOPHER HOJNY** ; **THORSTEN KOCH** ; **MATTHIAS MILTENBERGER**. ZIB-Report 17-61. Zuse Institute, December 2017

• *IBM ILOG CPLEX MIP Optimizer*, https://www.ibm.com
• **ANDREAS HIRSCH**. Werkzeugmaschinen: Grundlagen, Auslegung. Springer Vieweg | Springer Fachmedien Wiesbaden, 2012, 2